# EUROPÄISCHE PATENTSCHRIFT

(11) **EP 1 493 603 B1**
(45) Veröffentlichungstag und Bekanntmachung des Hinweises auf die Patenterteilung: **06.09.2006**
(21) Anmeldenummer: 04023733.1
(22) Anmeldetag: 20.09.2002
(51) Int. Cl.: B60J 7/14, B60J 7/20

(54) **Klappverdeck für ein Cabriolet-Fahrzeug**
Foldable roof for a cabriolet vehicle
Toit repliable pour un véhicule cabriolet

(30) Priorität: 20.09.2001 DE 10146266
(43) Veröffentlichungstag der Anmeldung: 05.01.2005
(62) Teilanmeldung aus: 02782683.3
(73) Patentinhaber: Edscha Cabrio-Dachsysteme GmbH, 94491 Hengersberg (DE)
(72) Erfinder: Obendiek, Klaus, 94032 Passau (DE); Haberl, Franz, 94574 Wallerfing (DE)
(74) Vertreter: Sparing, Rolf Klaus

(56) Entgegenhaltungen:
- EP-A- 0 704 330
- DE-A- 10 062 077
- DE-A- 10 133 957
- DE-A- 19 642 152
- DE-C- 10 006 290
- DE-C- 19 934 673

## Beschreibung

Die vorliegende Erfindung betrifft ein Klappverdeck für ein Cabriolet-Fahrzeug nach dem Oberbegriff des Anspruchs 1.

Im modernen Bau von Cabriolet-Fahrzeugen werden immer häufiger Cabriolet-Verdecke eingesetzt, welche aus Hartschalenteilen bestehen, die mittels beispielsweise als Lenkergetriebe ausgebildeten Zwangssteuerungen mit der Karosserie des Fahrzeugs verbunden sind und über diese Zwangssteuerungen automatisch von einem geschlossenen Verdeckzustand in einen geöffneten Verdeckzustand überführt werden können, wobei die Hartschalenteile in dem geöffneten Verdeckzustand in einem Heckbereich des Fahrzeugs abgelegt sind.

DE 198 05 477 C1 zeigt ein Verdeck für ein Cabriolet-Fahrzeug, bei dem das Verdeck aus zwei Hartschalendachteilen besteht, die beide an einer Lenkerkette festgelegt sind und bei einem Öffnungsvorgang des Verdecks mittels eines Antriebs der Lenkerkette in einem Heckbereich des Fahrzeugs abgelegt werden können. Eine solche Anordnung aus zwei Hartschalendachteilen ist nicht geeignet, größere Innenräume von beispielsweise vier- oder mehrsitzigen Fahrzeugen zu überdecken.

DE 199 34 673 C1 zeigt ein Hardtop für ein Cabriolet-Fahrzeug, bei dem ein vorderes, ein mittleres und ein hinteres Hartschalendachteil an einer gemeinsamen Lenkerkette festgelegt sind. Bedingt durch die Auslegung der Lenkerkette wird bei einem Öffnen des Verdecks das vordere Hartschalendachteil über dem mittleren Hartschalendachteil abgelegt, wobei das mittlere Hartschalendachteil über dem in eine umgekehrte Lage überführten hinteren Hartschalendachteil in einem Heckbereich des Fahrzeugs zu liegen kommt. Dabei zeigt sich als nachteilig, daß die umgekehrte Bombierung des mittleren und des hinteren Hartschalendachteils in der abgelegten Position nicht zu einer optimalen Ausnutzung des Raums im Heckbereich des Fahrzeugs beitragen. Ferner ist die im allgemeinen im hinteren Schalenteil vorgesehene Heckscheibe einem im Zweifel verbleibenden Beladeraum des Fahrzeugs unterhalb des Stapels der Dachschalenteile zugekehrt, wodurch einer Beschädigung der Heckscheibe bei einer Beladung des Fahrzeugs Vorschub geleistet wird.

DE 196 42 152 A1 zeigt ein Verdeck für eine Cabriolet-Fahrzeug, bei dem ein vorderes, ein mittleres und ein hinteres Hartschalendachteil so auf einer Lenkerkette festgelegt sind, daß bei einer Öffnung des Verdecks das vordere Dachteil unterhalb des mittleren Dachteils und das mittlere Dachteil unterhalb des hinteren Dachteils zu liegen kommt, wobei zudem eine weitere Antriebsvorrichtung im Heckbereich des Fahrzeugs eine in dem hinteren Dachteil einsetzbare Heckscheibe separat von dem Stapel der Dachteile wegschwenkt.

EP 0 704 330 B1 zeigt ein Klappverdeck für ein Cabriolet-Fahrzeug gemäß dem Oberbegriff des Anspruchs 1.

DE 100 06 290 zeigt ein umwandelbares Fahrzeugdach mit mehreren Schalenteilen, bei dem ein vorderes Schalenteil mittels eines Viergelenks über ein mittleres Schalenteil geschwenkt werden kann.

DE 199 34 673 C1 zeigt ein Hardtop für ein Cabriolet-Fahrzeug, dass drei Schalenteile aufweist, wobei ein vorderes Schalenteil mittels eines Viergelenks über ein mittlere Schalenteil geschwenkt werden kann.

Insgesamt ergeben sich aus der Anordnung sämtlicher Dachteile eines Cabriolet-Verdecks auf einer einzigen Lenkerkette dahingehend Nachteile, daß die Lenkerkette sehr stabil ausgelegt sein muß, was zu erhöhten Kosten führt. Zudem wird durch die Beschränkung auf eine einzige, zwangsgesteuerte Gelenkkette die gestalterische Flexibilität hinsichtlich der Größenverhältnisse der Dachteile, hinsichtlich der genauen Ablageposition und hinsichtlich der Reihenfolge und Orientierung der Dachteile in der abgelegten Position eingeschränkt.

Es ist die Aufgabe der Erfindung, ein Klappverdeck für ein Cabriolet-Fahrzeug zu schaffen, bei dem die Schalenteile des Verdecks , und insbesondere ein hinteres Schalenteil in einer besonders raumsparenden Weise in einem Heckbereich eines Fahrzeugs ablegbar sind.

Diese Aufgabe wird für ein eingangs genanntes Klappverdeck für ein Cabriolet-Fahrzeug erfindungsgemäß mit den kennzeichnenden Merkmalen des Anspruchs 1 gelöst.

Dabei sind das vordere und das mittlere Schalenteil mittels einer ersten Zwangssteuerung in dem Heckbereich des Cabriolet-Fahrzeugs ablegbar.

Des weiteren ist ein in entgegen der Fahrtrichtung verschwenkbares Heckelement vorgesehen, das im Zuge der Öffnungsbewegung des Verdecks aufschwenkbar ist und in einem geschlossenen Zustand die abgelegten Schalenteile des Verdecks überdeckt. Dabei ist das hintere Schalenteil bewegbar an dem Heckelement angebracht, so daß es, mittels einer Linearführung, in einer Kombination aus einer Schwenkbewegung und einer linearen Bewegung unter das Heckelement bewegbar ist. Durch eine solche lineare Bewegung wird ein besonders kleiner Bewegungsraum durch das hintere Schalenteil in Anspruch genommen.

In einer vorteilhaften Ausführung ist eine zweite Zwangssteuerung vorgesehen, die das hintere Schalenteil bewegt, so daß vorteilhaft nicht mehr sämtliche Schalenteile auf einer gemeinsamen Lenkerkette angeordnet sind.

Besonders bevorzugt ist dabei sowohl die Bewegung des hinteren Schalenteils gegenüber dem Heckelement als auch die Verschwenkung des Heckelements gegenüber dem Cabriolet-Fahrzeug mittels einer zweiten und einer dritten Antriebsvorrichtung antreibbar, so daß die beiden Bewegungsvorgänge beispielsweise durch eine Rechnersteuerung miteinander korreliert automatisch ablaufen können. Die dritte Antriebsvorrichtung ist dabei bevorzugt als rotatorischer Hydraulikzylinder ausgeführt, bei dem die lineare Bewegung eines hydraulischen Kolbens raumsparend in eine Drehbewegung eines Antriebsritzels umgesetzt wird.

Die erste Zwangssteuerung besteht vorzugsweise aus einem Lenkergetriebe, welches mittels eines ersten und eines zweiten Hauptlenkers schwenkbar an dem Cabriolet-Fahrzeug festgelegt ist. Das Lenkergetriebe besteht dabei vorzugsweise aus einer Kette von mindestens drei Viergelenken, wobei die beiden Hauptlenker Lenker des ersten Viergelenks ausbilden und das mittlere Schalenteil an dem zweiten Viergelenk und das vordere Schalenteil an dem dritten Viergelenk festgelegt ist. Eine solche Lenkerkette ist auf bekannte Weise antreibbar, so daß ein automatisches Ablegen des vorderen und des mittleren Schalenteils durch einen Antrieb der Lenkerkette in einem Heckbereich des Fahrzeugs erfolgen kann.

Der Antrieb der Lenkerkette ist dabei in einer bevorzugten Ausführungsform als rotatorischer Hydraulikzylinder ausgelegt, wodurch ein besonders raumsparender und dennoch robuster Antrieb der Lenkerkette gewährleistet ist. Alternativ kann jedoch ein Antrieb der Lenkerkette auch über einen herkömmlichen hydraulischen oder pneumatischen Zylinder mit Schubstange oder über einen Elektromotor erfolgen.

Um eine ausreichende Stabilität des erfindungsgemäßen Klappverdecks, insbesondere auch für den Fall eines Unfalls mit einem Überschlag des Fahrzeugs, zu ermöglichen, sind an dem hinteren Schalenteil Verstärkungen angebracht, wobei das hintere Schalenteil in einem geschlossenen Verdeckzustand eine C-Säule des Fahrzeugs bildet und die C-Säule durch die Verstärkungen besonders stabil ausgebildet ist.

Besonders bevorzugt ist bei einem erfindungsgemäßen Klappverdeck das hintere Schalenteil in einem geschlossenen Verdeckzustand über eine Kulissenführung mit dem mittleren Schalenteil verbunden. Dabei ist die Kulissenführung vorteilhaft so ausgestaltet, daß zumindest in einem Abschnitt einer Verdecköffnungsbewegung die Ausformung der Kulissenführung eine Relativbewegung der beiden Schalenteile zueinander erzwingt, die einer Schwenkbewegung um einen außerhalb der Schalenteile liegenden Drehpunkt entspricht. Hierdurch wird mit einfachen Mitteln sichergestellt, dass die Schalenteile in einem ersten Abschnitt der Öffnungsbewegung, bzw. in Umkehrung der Kinematik in einem letzten Abschnitt der Schließbewegung, nicht miteinander kollidieren.

Das vordere Schalenteil befindet sich in einer abgelegten Stellung des Klappverdecks gleichsinnig über dem mittleren Schalenteil, und das hintere Schalenteil befindet sich gleichsinnig über dem vorderen Schalenteil. Hierdurch wird eine besonders raumsparende Anordnung der abgelegten Schalenteile in einem geöffneten Verdeckzustand ermöglicht.

Weitere Vorteile und Merkmale der Erfindung ergeben sich aus dem nachfolgend beschriebenen Ausführungsbeispiel sowie den abhängigen Ansprüchen.

Nachfolgend wird ein bevorzugtes Ausführungsbeispiel eines erfindungsgemäßen Klappverdecks beschrieben und anhand der anliegenden Zeichnungen näher erläutert.
- Fig. 1: zeigt eine schematische Seitenansicht eines Cabriolet-Fahrzeugs mit einem erfindungsgemäßen Klappverdeck in einem geschlossenen Zustand.
- Fig. 2: zeigt ein Cabriolet-Fahrzeug gemäß Fig. 1 nach einem ersten Schritt einer Öffnungsbewegung des Klappverdecks.
- Fig. 3: zeigt ein Cabriolet-Fahrzeug gemäß Fig. 1 nach einem zweiten Schritt einer Öffnungsbewegung des Klappverdecks.
- Fig. 4: zeigt ein Cabriolet-Fahrzeug gemäß Fig. 1 nach einem dritten Schritt einer Öffnungsbewegung des Klappverdecks.
- Fig. 5: zeigt ein Cabriolet-Fahrzeug gemäß Fig. 1 nach einem vierten Schritt einer Öffnungsbewegung des Klappverdecks.
- Fig. 6: zeigt das Cabriolet-Fahrzeug gemäß Fig. 1 mit einem geöffneten und in einem Heckbereich des Fahrzeugs abgelegten Klappverdeck.
- Fig. 7: zeigt eine Seitenansicht eines Details eines erfindungsgemäßen Klappverdecks zur Führung zweier Dachteile zueinander.
- Fig. 8: zeigt eine Seitenansicht eines Details zur Führung des hinteren Schalenteils eines erfindungsgemäßen Klappverdecks.

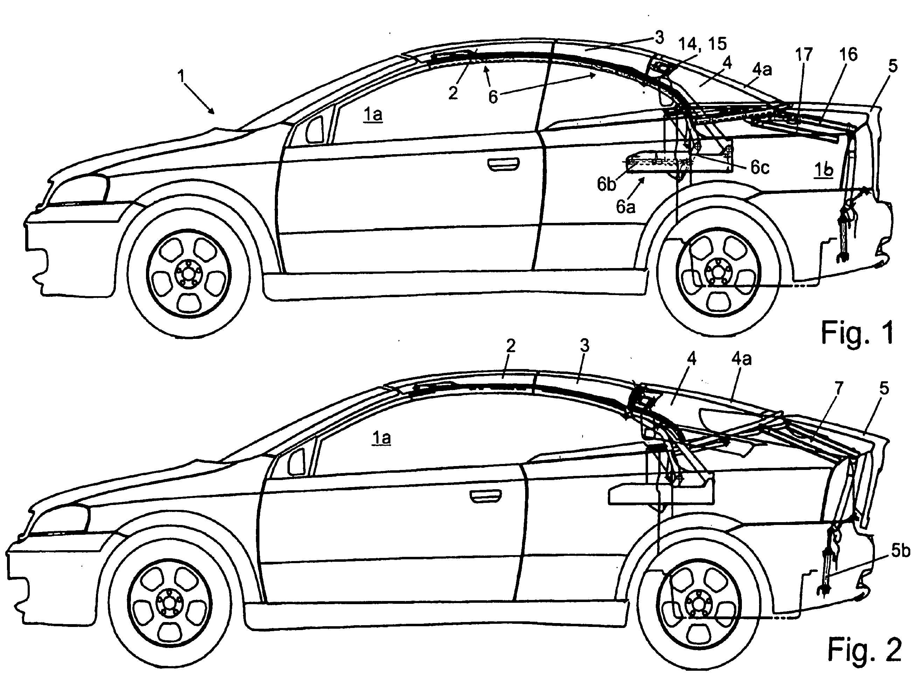

Fig. 1 zeigt ein Cabriolet-Fahrzeug 1, bei dem ein erfindungsgemäßes Klappverdeck in einem geschlossenen Zustand über einem Innenraum 1a des Fahrzeugs angeordnet ist. Das Klappverdeck umfaßt eine erste Zwangssteuerung 6, welche mittels zweier Hauptlenker 8, 9 an dem Cabriolet-Fahrzeug 1 bewegbar festgelegt ist. An der ersten Zwangssteuerung 6 sind ein vorderes Schalenteil 2 und ein mittleres Schalenteil 3 des Klappverdecks festgelegt. Ein hinteres Schalenteil 4 des Klappverdecks, welches eine starre Heckscheibe 4a umfaßt, ist mittels einer Linearführung 7 an einem Heckelement 5 des Cabriolet-Fahrzeugs 1 bewegbar festgelegt. An dem Heckelement 5 ist für eine Beladung eines in einem Heckbereich 1b des Cabriolet-Fahrzeugs 1 vorhandenen Volumens ein Kofferraumdeckel (nicht dargestellt) angeordnet, der auf bekannte Weise in Fahrtrichtung aufgeschwenkt werden kann.

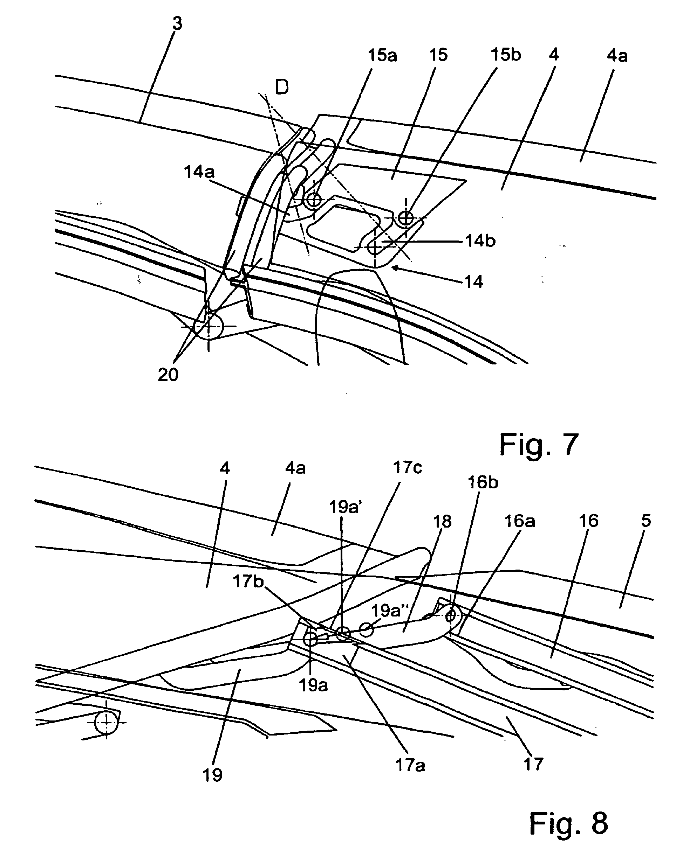

Wie insbesondere Fig. 8 im Detail zeigt, umfaßt die Linearführung im wesentlichen zwei mit dem Heckelement 5 fest verbundene Schienen 16, 17, wobei die erste Schiene 16 oberhalb der zweiten Schiene 17 angeordnet ist. In der ersten Schiene 16 ist ein erster Gleiter 16a so aufgenommen, daß er entlang der ersten Schiene 16 bewegbar ist. In der zweiten Schiene 17 ist ein zweiter Gleiter 17a so aufgenommen, daß er entlang der zweiten Schiene 17 bewegbar ist. Dabei ist an der zweiten Schiene 17 in ihrem oberen Endbereich eine Ausnehmung 17c vorgesehen, wobei eine an dem zweiten Gleiter 17a vorgesehene Schloßaufnahme 17b in einer Endposition des Gleiters 17a mit der Ausnehmung 17c überlappt.

An dem hinteren Schalenteil 4 sind im heckseitigen Bereich ein erster Halter 18 und ein zweiter Halter 19 festgelegt. Die bewegbare Festlegung des hinteren Schalenteils 4 an dem Heckelement 5 ist zum einen dadurch gegeben, daß der erste Halter 18 in einem Gelenk 16b mit dem ersten Gleiter 16a gelenkig verbunden ist. Zum anderen weist der zweite Halter 19 an seinem Ende einen Zapfen 19a auf. Dieser Zapfen 19a befindet sich je nach Zustand des Verdecks innerhalb oder außerhalb (siehe angedeutete Positionen 19a' und 19a" in Fig. 8) der Schloßaufnahme 17b des zweiten Gleiters 17a.

Insbesondere in Fig. 7 ist gezeigt, wie das hintere Schalenteil 4 an dem mittleren Schalenteil 3 lösbar festlegbar ist. Dabei ist an dem hinteren Schalenteil in seinem dem mittleren Schalenteil zugewandten Endbereich ein Riegelelement 15 mit zwei im wesentlichen in Fahrzeuglängsrichtung zueinander beabstandeten Zapfen 15a und 15b festgelegt. An dem mittleren Schalenteil 3 ist ein zu dem Riegelelement 15 korrespondierendes Kulissenelement 14 mit einer ersten, dem ersten Zapfen 15a zugeordneten kulissenartigen Ausnehmung 14a und einer zweiten, dem zweiten Zapfen 15b zugeordneten kulissenartigen Ausnehmung 14b festgelegt. Die beiden kulissenartigen Ausnehmungen 14a, 14b sind dabei unterschiedlich und derartig ausgeformt, daß bei Eingriff der beiden Zapfen 15a, 15b in die zugeordneten kulissenartigen Ausnehmungen 14a, 14b eine Bewegung des hinteren Schalenteils 4 relativ zu dem mittleren Schalenteil 3 nur in Form einer um einen virtuellen Drehpunkt D verlaufenden Verschwenkung möglich ist. Diese durch Zusammenwirken von Kulissenelement 14 und Riegelelement 15 erzwungene Bewegung verhindert, daß im Anfang eines Öffnungsvorgangs oder gegen Ende einer Schließbewegung des erfindungsgemäßen Klappverdecks die zueinander gerichteten Stirnseiten des mittleren Schalenteils 3 und des hinteren Schalenteils 4 miteinander kollidieren. Darüber hinaus ist durch die vorbeschriebene Zwangsbewegung gewährleistet, daß an den Schalenteilen 3, 4 vorgesehene stirnseitige Dichtungen 20 besonders verschleißarm zueinander bewegt werden.

Ein erster Schritt einer Verdecköffnungsbewegung ist in Fig. 2 gezeigt. Dabei wurde zunächst ausgehend von der geschlossenen Verdeckposition gemäß Fig. 1 das Heckelement mittels einer dritten Antriebsvorrichtung 5b um einen kleinen Weg entgegen der Fahrtrichtung aufgeschwenkt. Dabei ist der zuvor beschriebene Zapfen 19a ausgehend von einer dem geschlossenen Verdeck entsprechenden Stellung 19a" über eine Zwischenstellung 19a' in eine durch Anschlag in der Schloßaufnahme 17b des zweiten Gleiters definierte Position bewegt worden, während das hintere Schalenteil 4 eine durch die drehbare Verbindung des Halters 18 mit dem ersten Gleiter 16a bedingte Drehbewegung vollzogen hat. Diese Drehbewegung des hinteren Schalenteils 4 gegenüber dem Heckelement 5 ist insbesondere aus einem Vergleich von Fig. 1 und Fig. 2 bezüglich ihrer relativen Stellungen zueinander ersichtlich. Während des vorbeschriebenen ersten Abschnitts der Öffnungsbewegung des erfindungsgemäßen Klappverdecks erfolgt auch die vorbeschriebene Verschwenkung des hinteren Schalenteils 4 gegenüber dem mittleren Schalenteil 3 um den virtuellen Drehpunkt D. Etwa ab der Stellung des hinteren Schalenteils 4 gemäß Fig. 2 greifen die Zapfen 15a, 15b nicht mehr in die kulissenartigen Ausnehmungen 14a, 14b ein, und das hintere Schalenteil 4 ist nicht mehr mit dem mittleren Schalenteil 3 verbunden.

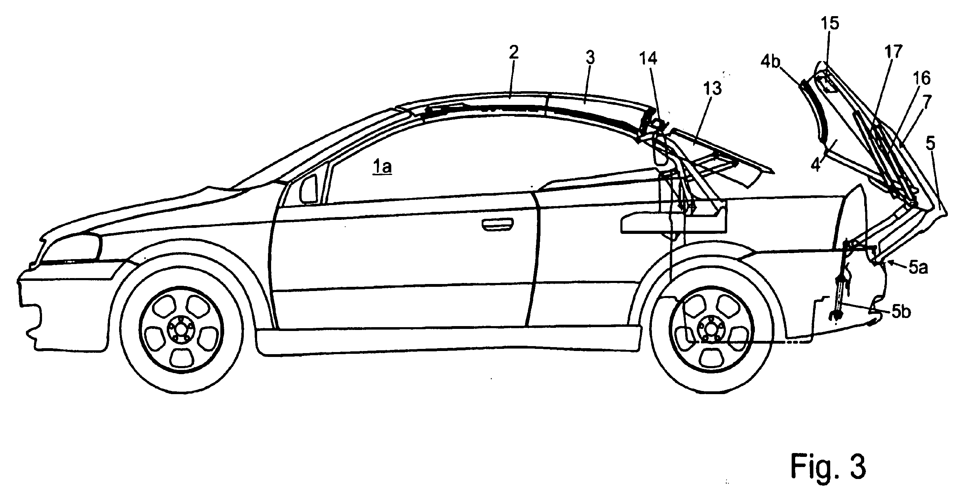

Fig. 3 zeigt einen zweiten Schritt einer Verdecköffnungsbewegung, bei der das hintere Schalenteil 4 bereits von dem mittleren Schalenteil 3 in Richtung des Fahrzeughecks wegbewegt ist, wobei das Heckelement 5 entgegen der Fahrtrichtung aufgeschwenkt ist. Dabei ist das hintere Schalenteil 4 mittels seiner vorbeschriebenen Halterung an den Gleitern 16a, 17a entlang der Linearführung 7 unter das Heckelement 5 bewegt worden. Da durch den ersten Abschnitt der Verdecköffnungsbewegung (siehe Fig. 2) eine nahezu parallele Ausrichtung von hinterem Schalenteil 4 und Heckelement 5 entstanden ist, verläuft die Verschiebung des hinteren Schalenteils 4 unter das Heckelement 5 besonders raumsparend. Die Verschiebung entlang der Linearführung 7 wird mittels einer zweiten Antriebsvorrichtung (nicht dargestellt) vorgenommen.

Insbesondere zeigt Fig. 3 auch, daß das hintere Schalenteil 4 in einem Bereich, in dem es im geschlossenen Verdeckzustand gemäß Fig. 1 eine C-Säule des Cabriolet-Fahrzeugs 1 ausbildet, mit einer Verstärkung 4b versehen ist.

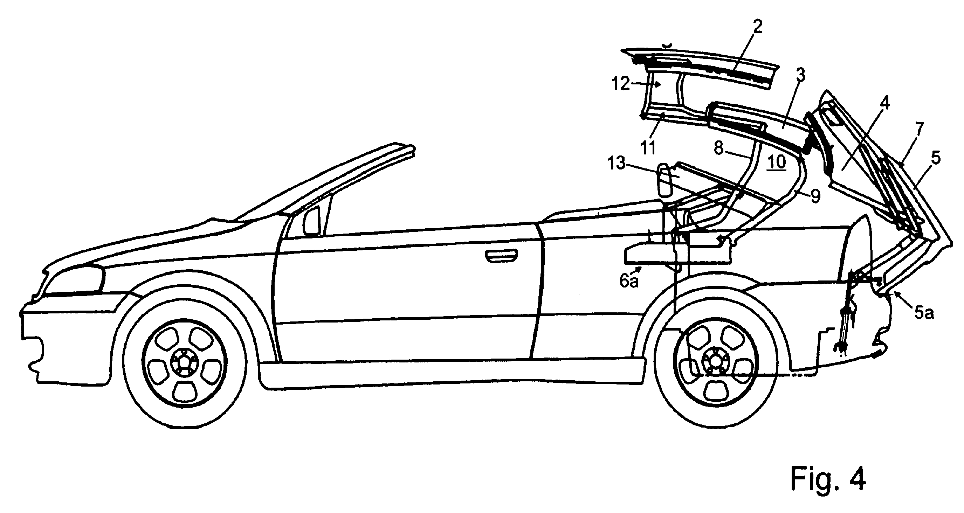

In einem dritten Schritt einer Öffnungsbewegung des Klappverdecks gemäß Fig. 4 befinden sich Heckelement 5 und hinteres Schalenteil 4 in der gleichen Position wie in Fig. 3. Das Heckelement 5 ist mittels eines Viergelenks 5a im Bereich eines hinteren Querträgers, welcher zumeist unmittelbar vor einem hinteren Stoßfänger des Fahrzeugs angeordnet ist, mit dem Cabriolet-Fahrzeug 1 verbunden.

Eine zweite Zwangssteuerung, durch welche das hintere Schalenteil 4 in dem Heckbereich 1b des Cabriolet-Fahrzeugs 1 ablegbar ist, umfaßt die Linearführung 7 sowie das Heckelement 5.

Fig. 4 zeigt, daß in dem dritten Schritt einer Verdecköffnungsbewegung das vordere Schalenteil 2 und das mittlere Schalenteil 3 mittels einer durch eine erste Antriebsvorrichtung 6a angetriebenen Bewegung der ersten Zwangssteuerung 6 so bewegt werden, daß das vordere Schalenteil 2 über das mittlere Schalenteil 3 verschwenkt wird. Wie insbesondere in Fig. 3 gezeigt, umfaßt die erste Zwangssteuerung 6 ein Lenkergetriebe, welches eine Kette aus einem ersten Viergelenk 10, einem zweiten Viergelenk 11 und einem dritten Viergelenk 12 umfaßt. Dabei bilden der erste Hauptlenker 8 und der zweite Hauptlenker 9 jeweils Lenker des ersten Viergelenks 10, dessen Basis von dem Cabriolet-Fahrzeug 1 gebildet wird. Die Koppel des ersten Viergelenks 10 bildet zugleich einen Lenker des zweiten Viergelenks 11. Ein Lenker des zweiten Viergelenks 11 bildet zugleich eine Basis des dritten Viergelenks 12. Das mittlere Schalenteil 3 ist an einem Lenker des zweiten Viergelenks 11 festgelegt. Ein zweiter Lenker des zweiten Viergelenks 11 ist mit einem der Lenker des dritten Viergelenks 12 verbunden und treibt somit das dritte Viergelenk 12 an, an dessen Koppel das vordere Schalenteil 2 festgelegt ist. Das gesamte Lenkergetriebe wird mittels der einen Hydraulikzylinder 6b umfassenden Antriebsvorrichtung 6a angetrieben, welche an dem Cabriolet-Fahrzeug 1 festgelegt ist. Der Hydraulikzylinder 6b ist über einen Zwischenlenker 6c mit zumindest einem der Hauptlenker 8, 9 des ersten Viergelenks 10 verbunden.

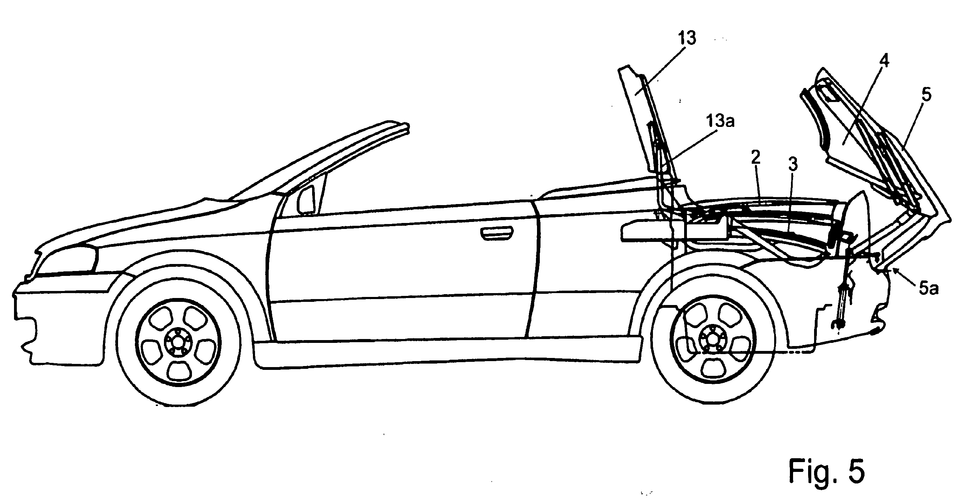

In der gemäß Fig. 5 dargestellten geöffneten Stellung des Heckelements 5 mit dem an dem Heckelement 5 angelenktem hinteren Dachteil 4 wird eine Verschwenkung des vorderen Schalenteils 2 und des mittleren Schalenteils 3 in den Heckbereich 1b des Cabriolet-Fahrzeugs 1 ermöglicht. Eine Endposition dieser Verschwenkung des vorderen und des mittleren Schalenteils 2, 3 in den Heckbereich 1b ist in Fig. 5 gezeigt, wobei sich das Heckelement 5 in einer geöffneten und gegen die Fahrtrichtung verschwenkten Stellung befindet.

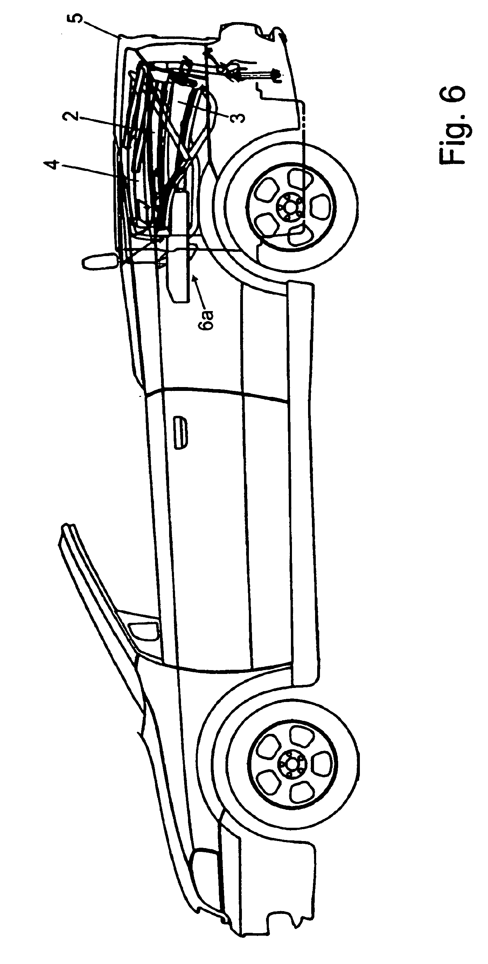

In einem letzten Abschnitt der Verdecköffnungsbewegung wird nunmehr das Heckelement 5 wieder zugeschwenkt, so daß eine abgelegte Position des Klappverdecks gemäß Fig. 6 erreicht wird. Dabei sind sämtliche drei Schalenteile 2, 3, 4 im wesentlichen in der gleichen Orientierung angeordnet wie im geschlossenen Zustand des Klappverdecks gemäß Fig. 1. In dieser Orientierung befindet sich das vordere Schalenteil 2 oberhalb des mittleren Schalenteils 3, wobei sich das hintere Schalenteil 4 oberhalb des vorderen Schalenteils 2 befindet. Sämtliche drei im wesentlichen stapelartig übereinander angeordneten Schalenteile 2, 3, 4 werden von dem Heckelement 5 zumindest teilweise überdeckt.

Die raumsparende Anordnung der drei Schalenteile der gezeigten bevorzugten Ausführungsform eines erfindungsgemäßen Klappverdecks ist insbesondere durch die gleichgerichtete Bombierung der drei Schalenteile in der abgelegten Position gemäß Fig. 6 sowie die Tatsache, daß das vordere Schalenteil 2 oberhalb des mittleren Schalenteils 3 und unterhalb des hinteren Schalenteils 4 angeordnet ist, begünstigt. Dadurch ist ein Raumbedarf des erfindungsgemäßen Klappverdecks der abgelegten Verdeckposition ermöglicht, der insgesamt geringer ist, als es beispielsweise dem im gesamten vom hinteren Schalenteil theoretisch umschlossenen Volumen entspricht.

Die Verschwenkung des hinteren Schalenteils 4 gegenüber dem Heckelement 5 wird mittels der zweiten Antriebsvorrichtung (nicht dargestellt) vollzogen und die Verschwenkung des Heckelements 5 gegenüber dem Cabriolet-Fahrzeug 1 wird mittels der dritten Antriebsvorrichtung 5b vollzogen. Insgesamt sind also eine erste Antriebsvorrichtung 6a zum Antrieb der ersten Zwangssteuerung 6 und somit zur Verschwenkung des vorderen Schalenteils 2 und des mittleren Schalenteils 3, eine zweite Antriebsvorrichtung (nicht dargestellt) zur Verschiebung des hinteren Schalenteils 4 gegenüber dem Heckelement 5 und eine dritte Antriebsvorrichtung 5b zur Verschwenkung des Heckelements 5 gemeinsam mit dem hinteren Schalenteil 4 gegenüber dem Cabriolet-Fahrzeug 1 vorgesehen. Die erste Antriebsvorrichtung 6a und die dritte Antriebsvorrichtung 5b sind jeweils als Hydraulikzylinder ausgeführt. Alternativ können aber eine oder mehrere der drei Antriebsvorrichtungen auch als Elektromotoren ausgeführt sein. Die automatische Ansteuerung der drei Antriebsvorrichtungen geschieht durch eine gemeinsame Steuerelektronik, so daß mittels der Steuerelektronik ein wohldefinierter Ablauf der gesamten Öffnungsbewegung des erfindungsgemäßen Klappverdecks gewährleistet ist. Die Steuerelektronik umfaßt dabei sowohl Signalgeber zum Schalten der Elektromotoren bzw. Hydraulikventile als auch Sensoren zur Rückmeldung der Stellung der jeweiligen Antriebsvorrichtung bzw. Zwangssteuerung. Insbesondere wird durch eine geeignete Auslegung dieser Steuerelektronik ein besonders zeitsparender und für den ausstehenden Betrachter ästhetisch wertvoller Bewegungsvorgang beim Öffnen bzw. Schließen des Klappverdecks ermöglicht, wobei ein Teil der Öffnungsbewegung des vorderen und mittleren Schalenteils 2, 3 bereits während der Öffnungsbewegung des Heckelements bzw. bei gleichzeitiger Verschiebung des hinteren Schalenteils 4 gegenüber dem Heckelement 5 erfolgen kann.

Die Beladung des Kofferraumvolumens im Heckbereich 1b im Falle des geöffneten Verdecks gemäß Fig. 6 wird insbesondere durch die vorteilhafte Stapelung und Orientierung der Schalenteile 2, 3, 4 (siehe Fig. 6) erleichtert, wobei durch die Tatsache, daß das hintere Schalenteil 4 zuoberst liegt, ein Beschädigen der Heckscheibe 4a bei einem Beladen des Kofferraumvolumens wirkungsvoll verhindert wird.

Ein weiteres bewegliches und angetriebenes Element des erfindungsgemäßen Klappverdecks ist die in Fig. 1 bis 6 gezeigte Abdeckvorrichtung 13. Dabei handelt es sich um eine in den Endpositionen des erfindungsgemäßen Klappverdecks im Bereich einer konventionellen Hutablage positionierte Abdeckung, die mittels eines antreibbaren Lenkergetriebes 13a mit dem Cabriolet-Fahrzeug 1 verbunden ist. Durch eine eigene Antriebsvorrichtung (nicht dargestellt) angetrieben und mittels der gemeinsamen Steuerelektronik koordiniert, schwenkt die Abdeckvorrichtung 13 während der Anfangsphase der Verdecköffnungsbewegung (siehe Fig. 2 bis 5) auf, so daß für das Ablegen vor allem der vorderen und mittleren Schalenteile 2, 3 des erfindungsgemäßen Klappverdecks im Heckbereich 1b des Cabriolet-Fahrzeugs 1 ausreichend Bewegungsraum zur Verfügung steht. In einem letzten Abschnitt der Verdecköffnungsbewegung schwenkt die Abdeckvorrichtung 13 wieder zu, wobei eine Oberfläche im Heckbereich des Cabriolet-Fahrzeugs 1 gemeinsam von der Abdeckvorrichtung 13 und dem Heckelement 5 gebildet wird.

Die Schließbewegung eines erfindungsgemäßen Klappverdecks läuft entsprechend in Umkehrung der zuvor beschriebenen Kinematik ab.

## Patentansprüche

1. Klappverdeck für ein Cabriolet-Fahrzeug (1), umfassend
ein hinteres, eine Heckscheibe (4a) des Cabriolet-Fahrzeugs umfassendes Schalenteil (4),
zumindest ein vorderes Schalenteil (2), und
ein mittleres Schalenteil (3),
wobei das vordere, das mittlere und das hintere Schalenteil (2, 3 und 4) in einem geschlossenen Zustand als Verdeck über einem Innenraum (1a) des Cabriolet-Fahrzeugs (1) anordenbar sind, und
wobei das mittlere Schalenteil (3) mittels eines Lenkergetriebes (10, 11, 12) in einem Heckbereich (1b) des Cabriolet-Fahrzeugs (1) ablegbar ist,
wobei in einem vollständig geöffneten Verdeckzustand das vordere Schalenteil (2) oberhalb des mittleren Schalenteils (3) und das hintere Schalenteil (4) oberhalb des vorderen Schalenteils (2) angeordnet sind,
wobei die drei Schalenteile (2, 3, 4) in dem vollständig geöffneten Verdeckzustand stapelartig übereinander angeordnet sind und gleichsinnig ausgerichtet sind wie in dem geschlossenen Verdeckzustand,
**dadurch gekennzeichnet,**
**dass** das vordere Schalenteil (2) und das mittlere Schalenteil (3) mittels einer ersten Zwangssteuerung (6) in dem Heckbereich (1b) des Cabriolet-Fahrzeugs ablegbar sind, und
**dass** das hintere Schalenteil (4) an einem den Heckbereich (1b) des Cabriolet-Fahrzeugs (1) zumindest teilweise überdeckenden Heckelement (5) bewegbar angebracht ist,
und **dass** das hintere Schalenteil (4) mittels einer Linearführung (7) an dem Heckelement (5) angebracht ist.

2. Klappverdeck nach Anspruch 1, **dadurch gekennzeichnet, dass** die Linearführung eine erste Schiene (16) und eine zweite, unterhalb der ersten Schiene (16) angeordnete Schiene (17) umfaßt.

3. Klappverdeck nach Anspruch 2, **dadurch gekennzeichnet, dass** das hintere Schalenteil (4) mit einer der Schienen (16, 17) drehbar und linear bewegbar verbunden ist.

4. Klappverdeck nach einem der Ansprüche 2 oder 3, **dadurch gekennzeichnet, dass** das hintere Schalenteil (4) an einer der Schienen (16, 17) lösbar festlegbar ist.

5. Klappverdeck nach einem der Ansprüche 1 bis 4, **dadurch gekennzeichnet, dass** eine zweite Zwangssteuerung das Heckelement (5) und die Linearführung (7) umfaßt.

6. Klappverdeck nach Anspruch 5, **dadurch gekennzeichnet, dass** das hintere Schalenteil (4) mittels der zweiten Zwangssteuerung (7) in dem Heckbereich (1b) ablegbar ist.

7. Klappverdeck nach einem der Ansprüche 1 bis 6, **dadurch gekennzeichnet, dass** ein erster Häuptlenker (8) und ein zweiter Hauptlenker (9) des Lenkergetriebes (10, 11, 12) schwenkbar an dem Cabriolet-Fahrzeug (1) festgelegt sind.

8. Klappverdeck nach einem der Ansprüche 1 bis 7, **dadurch gekennzeichnet, dass** das Lenkergetriebe eine Kette aus einem ersten Viergelenk (10), einem zweiten Viergelenk (11) und einem dritten Viergelenk (12) umfaßt, wobei das mittlere Schalenteil (3) an dem zweiten Viergelenk (11) und das vordere Schalenteil (2) an dem dritten Viergelenk (12) festgelegt sind, und wobei ein erster und ein zweiter Hauptlenker (8 und 9) als Lenker des ersten Viergelenks (10) ausgebildet sind.

9. Klappverdeck nach einem der Ansprüche 1 bis 8, **dadurch gekennzeichnet, dass** die erste Zwangssteuerung (6) mittels einer ersten Antriebsvorrichtung (6a) antreibbar ist.

10. Klappverdeck nach Anspruch 9, **dadurch gekennzeichnet, dass** die erste Antriebsvorrichtung (6a) einen hydraulischen oder pneumatischen Antriebszylinder (6b) umfaßt.

11. Klappverdeck nach Anspruch 9, **dadurch gekennzeichnet, dass** die erste Antriebsvorrichtung (6a) einen rotatorischen Hydraulikzylinder umfaßt.

12. Klappverdeck nach einem der Ansprüche 5 bis 11, **dadurch gekennzeichnet, dass** das hintere Schalenteil (4) mittels der zweiten Zwangssteuerung gegenüber dem Heckelement (5) bewegbar ist.

13. Klappverdeck nach einem der Ansprüche 5 bis 12, **dadurch gekennzeichnet, dass** die zweite Zwangssteuerung mittels einer zweiten Antriebsvorrichtung antreibbar ist.

14. Klappverdeck nach einem der Ansprüche 1 bis 13, **dadurch gekennzeichnet, dass** eine dritte Antriebsvorrichtung (5b) zur Verschwenkung eines Heckelements (5) vorgesehen ist.

15. Klappverdeck nach Anspruch 14, **dadurch gekennzeichnet, dass** die zweite Zwangssteuerung die dritte Antriebsvorrichtung (5b) umfaßt.

16. Klappverdeck nach einem der Ansprüche 1 bis 15, **dadurch gekennzeichnet, dass** ein Heckelement (5) vorgesehen ist, welches gegenüber dem Cabriolet-Fahrzeug (1) entgegen der Fahrtrichtung verschwenkbar ist.

17. Klappverdeck nach Anspruch 16, **dadurch gekennzeichnet, dass** das Heckelement (5) das hintere Schalenteil (4) in einem geöffneten Verdeckzustand zumindest teilweise überdeckt.

18. Klappverdeck nach Anspruch 16 oder 17, **dadurch gekennzeichnet, dass** das Heckelement den Heckbereich (1b) des Cabriolet-Fahrzeugs (1) zumindest teilweise überdeckt.

19. Klappverdeck nach einem der Ansprüche 1 bis 18, **dadurch gekennzeichnet, dass** in einer abgelegten Stellung das vordere Schalenteil (2) gleichsinnig über dem mittleren Schalenteil (3) und das hintere Schalenteil (4) gleichsinnig über dem vorderen Schalenteil (2) angeordnet ist.

20. Klappverdeck nach einem der Ansprüche 1 bis 19, **dadurch gekennzeichnet, dass** das hintere Schalenteil (4) in dem geschlossenen Zustand eine mit einer Verstärkung (4b) versehene C-Säule des Cabriolet-Fahrzeugs (1) ausbildet.

21. Klappverdeck nach einem der Ansprüche 1 bis 20, **dadurch gekennzeichnet, dass** das hintere Schalenteil (4) im geschlossenen Zustand des Klappverdecks über eine Kulissenführung (14) an dem mittleren Schalenteil (3) lösbar festgelegt ist, wobei die Kulissenführung (14) so ausgeformt ist, dass zumindest während eines Teiles der Öffnungsbewegung des Klappverdecks eine Verschwenkung des hinteren Dachteils (4) gegenüber dem mittleren Dachteil (3) um einen beabstandet zu den Dachteilen (3, 4) liegenden virtuellen Drehpunkt D durch die Kulissenführung erzwungen ist.

## Claims

1. A folding top for a convertible vehicle (1), comprising
a rear shell component (4) including a rear window (4a) of the convertible vehicle,
at least one front shell component (2), and
a central shell component (3),
it being possible for the front, the central and the rear shell component (2, 3, 4) to be arranged as a top over an interior of the convertible vehicle in a closed condition, and
it being possible for the central shell component (3) to be deposited in a rear area (1b) of the convertible vehicle (1) by means of a link mechanism,
it being possible for the front shell component (2) to be arranged over the central shell component (3) and for the rear shell component (4) to be arranged over the front shell component (2) in a fully openend condition of the top,
it being possible for the three shell components (2, 3, 4), in the fully opened condition of the top, to be arranged stack-like above each other and in the same sense as in the closed condition of the top, **characterized in**
**that** the front shell component (2) and the central shell component (3) can be deposited in the rear area (1b) of the convertible vehicle (1) by means of a first positive control mechanism, and
**that** the rear shell component (4) is movably mounted on a rear element (5) that at least partially covers the rear area (1b) of the convertible vehicle (1), and
**that** the rear shell component (4) is mounted on the rear element (5) by means of a linear guide (7).

2. The folding top as claimed in claim 1, **characterized in that** the linear guide (7) comprises a first rail (16) and a second rail (17) arranged below the first rail (16).

3. The folding top as claimed in claim 2, **characterized in that** the rear shell component (4) is connected in a rotatable and a linearly movable manner to one of the rails (16, 17).

4. The folding top as claimed in one of claims 2 or 3, **characterized in that** the rear shell component (4) can be releasably fixed on one of the rails (16, 17).

5. The folding top as claimed in one of claims 2 to 4, **characterized in that** a second positive control mechanism comprises the rear element (5) and the linear guide (7).

6. The folding top as claimed in claim 5, **characterized in that** the rear shell component (4) can be deposited in the rear area (1 b) by means of the second positive control mechanism.

7. The folding top as claimed in one of claims 1 to 6, **characterized in that** a first main link (8) and a second main link (9) of the link mechanism (10, 11, 12) are pivotally fixed on the convertible vehicle (1).

8. The folding top as claimed in one of claims 1 to 7, **characterized in that** the link mechanism comprises a chain comprising a first four-bar linkage (10), a second four-bar linkage (11) and a third four-bar linkage (12), the central shell component (3) being fixed on the second four-bar linkage (11) and the front shell component (2) being fixed on the third four-bar linkage (12), and the first and the second main links being designed as links of the first four-bar linkage (10).

9. The folding top as claimed in one of claims 1 to 8, **characterized in that** the first positive control mechanism (6) can be driven by means of a first drive device (6a).

10. The folding top as claimed in claim 9, **characterized in that** the first drive device (6a) comprises a hydraulic or pneumatic drive cylinder (6b).

11. The folding top as claimed in claim 9, **characterized in that** the first drive device (6a) comprises a rotary hydraulic cylinder.

12. The folding top as claimed in one of claims 5 to 11, **characterized in that** the rear shell component (4) is movable relative to the rear element (5) by means of the second positive control mechanism.

13. The folding top as claimed in one of claims 5 to 12, **characterized in that** the second positive drive mechanism can be driven by means of a second drive device.

14. The folding top as claimed in one of claims 1 to 13, **characterized in that** a third drive device (5b) is provided for pivoting a rear element (5).

15. The folding top as claimed in claim 14, **characterized in that** the second positive drive control mechanism comprises the third drive device (5b).

16. The folding top as claimed in one of claims 1 to 15, **characterized in that** a rear element (5) is provided which can be pivoted relative to the convertible vehicle (1) counter to the direction of travel.

17. The folding top as claimed in claim 16, **characterized in that** the rear element (5) at least partially covers the rear shell component (4) in an opened condition of the top.

18. The folding top as claimed in claim 16 or 17, **characterized in that** the rear element at least partially covers the rear area (1 b) of the convertible vehicle (1).

19. The folding top as claimed in one of claims 1 to 18, **characterized in that** the front shell component (2) is arranged in the same sense over the central shell component (3), and the rear shell component (4) is arranged in the same sense over the front shell component (2) in a deposited position.

20. The folding top as claimed in one of claims 1 to 19, **characterized in that** the rear shell component (4) forms a C-pillar provided with a reinforcement (4b) of the convertible vehicle (1) in the closed condition.

21. The folding top as claimed in one of claims 1 to 20, **characterized in that** the rear shell component (4) is releasably fixed on the central shell component (3) via a slotted-guide mechanism (14) in the closed state of the folding top, the slotted-guide mechanism (14) being shaped in such a manner that, at least during part of the opening movement of the folding top, a pivoting of the rear roof part (4) relative to the central roof part (3) about a virtual pivot point D being situated spaced apart from the roof parts (3, 4) is forced by the slotted-guide mechanism.

## Revendications

1. Capote repliable pour véhicule cabriolet (1), comportant
une pièce de coque arrière (4) comportant une vitre arrière (4a) du véhicule cabriolet (1),
au moins une pièce de coque avant (2), et
une pièce de coque médiane (3),
les pièces de coque avant, médiane et arrière (2, 3 et 4) étant disposée à l'état fermé sous forme de capote au-dessus un habitacle (1 a) du véhicule cabriolet (1), et
la pièce de coque médiane (3) pouvant être rangée au moyen d'une transmission par bras (10, 11, 12) dans une région arrière (1 b) du véhicule cabriolet (1),
la pièce de coque avant (2) étant disposée au-dessus la pièce de coque médiane (3) et la pièce de coque arrière (4) étant disposée au-dessus la pièce de coque avant (2) lorsque la capote est complètement ouverte,
les trois pièces de coque (2, 3, 4) étant disposées comme une pile échafaudées et dans le même sens lorsque la capote est complètement ouverte, comme dans la position fermée de la capote,
**caractérisée en ce**
**que** la pièce de coque avant (2) et la pièce de coque médiane (3) pouvant être rangées au moyen d'une première commande forcée (6) dans une région arrière (1b) du véhicule cabriolet (1), et
**que** la pièce de coque arrière (4) étant montée de façon mobile sur un élément arrière (5) du véhicule cabriolet (1) recouvrant au moins partiellement la région arrière (1b), et
**que** la pièce de coque arrière (4) étant montée sur l'élément arrière (5) au moyen d'un guide linéaire (7).

2. Capote repliable selon la revendication 1, **caractérisée en ce que** le guide linéaire (7) comporte une première glissière (16) et une deuxième glissière (17) placée au-dessous de la première glissière (16).

3. Capote repliable selon la revendication 2, **caractérisée en ce que** la pièce de coque arrière (4) étant reliée à l'une des glissières (16, 17) de façon à pouvoir effectuer un mouvement rotatif et un mouvement linéaire.

4. Capote repliable selon l'une des revendications 2 ou 3, **caractérisée en ce que** la pièce de coque arrière (4) étant montée de façon amovible sur l'une des glissières (16, 17).

5. Capote repliable selon l'une des revendications 1 à 4, **caractérisée en ce que** une deuxième commande forcée comporte l'élément arrière (5) et le guide linéaire (7).

6. Capote repliable selon la revendication 5, **caractérisée en ce que** la pièce de coque arrière (4) pouvant être rangée au moyen de la deuxième commande forcée (7) dans la région arrière (1b).

7. Capote repliable selon l'une des revendications 1 à 6, **caractérisée en ce que** un premier bras principal (8) et un deuxième bras principal (9) de la transmission par bras (6) étant fixées à pivotement au véhicule cabriolet (1).

8. Capote repliable selon l'une des revendications 1 à 7, **caractérisée en ce que** la transmission par bras (6) comporte une chaîne constituée d'un premier quadrilatère articulé (10), un deuxième quadrilatère articulé (11) et un troisième quadrilatère articulé (12), la pièce de coque médiane (3) étant fixée au deuxième quadrilatère articulé (11) et la pièce de coque avant (2) étant fixée au troisième quadrilatère articulé (12), et les premier et deuxième bras principaux (8 et 9) étant conformés en bras du premier quadrilatère articulé (10).

9. Capote repliable selon l'une des revendications 1 à 8, **caractérisée en ce que** la première commande forcée (6) pouvant être entraînée au moyen d'un premier dispositif d'entraînement (6a).

10. Capote repliable selon la revendication 9, **caractérisée en ce que** le premier dispositif d'entraînement (6a) comporte un vérin d'entraînement hydraulique ou pneumatique (6b).

11. Capote repliable selon la revendication 9, **caractérisée en ce que** le premier dispositif d'entraînement (6a) comporte un vérin hydraulique rotatif.

12. Capote repliable selon l'une des revendications 5 à 11, **caractérisée en ce que** la pièce de coque arrière (4) étant mobile par rapport à l'élément arrière (5) au moyen de la deuxième commande forcée.

13. Capote repliable selon l'une des revendications 5 à 12, **caractérisée en ce que** la deuxième commande forcée pouvant être entraînée au moyen d'un deuxième dispositif d'entraînement.

14. Capote repliable selon l'une des revendications 1 à 13, **caractérisée en ce qu'**un troisième dispositif d'entraînement (5b) est prévu pour faire pivoter l'élément arrière (5).

15. Capote repliable selon la revendication 14, **caractérisée en ce que** la deuxième commande forcée comporte le troisième dispositif d'entraînement (5b).

16. Capote repliable selon l'une des revendications 1 à 15, **caractérisée en ce qu'**un élément arrière (5) est prévu étant apte à pivoter par rapport au véhicule cabriolet (1) dans le sens opposé au sens de roulement.

17. Capote repliable selon la revendication 16, **caractérisée en ce que** l'élément arrière (5) recouvrant au moins partiellement la pièce de coque arrière (4) lorsque la capote est ouverte.

18. Capote repliable selon la revendication 16 ou 17, **caractérisée en ce que** l'élément arrière recouvrant au moins partiellement la région arrière (1 b) du véhicule cabriolet (1).

19. Capote repliable selon l'une des revendications 1 à 18, **caractérisée en ce que**, dans une position rangée, la pièce de coque avant (2) est disposé dans le même sens au-dessus de la pièce de coque médiane (3) et la pièce de coque arrière (4) est disposée dans le même sens au-dessus de la pièce de coque avant (2).

20. Capote repliable selon l'une des revendications 1 à 19, **caractérisée en ce que** la pièce de coque arrière (4) forme à l'état fermé une colonne en C, dotée d'un renforcement (4b), du véhicule cabriolet (1).

21. Capote repliable selon l'une des revendications 1 à 20, **caractérisée en ce que** la pièce de coque arrière (4) est fixée de façon amovible au moyen d'un guide coulissant (14) à la pièce de coque médiane (3) lorsque la capote repliable est fermée, le guide coulissant (14) étant conformé de telle sorte que celui-ci contraind la partie de toit arrière (4) à pivoter par rapport à la partie de toit médiane (3) autour d'un point de rotation virtuel D, se trouvant à distance des parties de toit (3, 4), au moins pendant une partie du mouvement d'ouverture de la capote repliable.
